# EUROPEAN PATENT APPLICATION

(11) **EP 1 679 180 A2**
(43) Date of publication of application: **12.07.2006**
(21) Application number: 05078042.8
(22) Date of filing: 29.12.2005
(51) Int. Cl.: B29C 65/20, E06B 3/96

(54) **Method for connecting two plastic jambs**

(30) Priority: 11.01.2005 BE 200500012
(71) Applicant: Berten Lieven & Co. (Berlico) N.V., 8520 Kuurne (BE)
(72) Inventor: Berten, Lieven, 8510 Rollegem (BE); Berten, Etien, 8510 Rollegem (BE)
(74) Representative: Donné, Eddy

(57) **Abstract**

Method for connecting two plastic jambs (1-2) for a window or the like which mainly consists in heating a contact surface (14) of at least one of both jambs (1) and pressing it against a corresponding contact surface (15) of the other jamb (2) so as to weld them together whereby, before both jambs (1-2) are welded, a part of the contact surface (14) of at least one of both jambs (1-2) is removed along at least one of the outer walls (9,11) of this jamb (1, 2) over a certain distance (A) so as to form an edge (16, 17) which corresponds to a joint (18) to be realised, characterised in that at least one of the jambs (1, 2), before both jambs (1, 2) are connected, is provided with a coating of lacquer (13) on its above-mentioned outer wall (9, 11).

## Description

The present invention concerns a method for connecting two plastic jambs, in particular window jambs or the like.

It is known to connect two plastic jambs by means of welding, in particular by heating their mutual contact surfaces and subsequently pressing them together, such that the parts which have been softened by the heating can be pressed into one another and can be melted together.

A disadvantage of this method is that when one or several of the side walls of the jambs have been finished with a coating of lacquer or the like, this coating of lacquer will be scorched while the contact surfaces are being heated, as a result of which, when both jambs are connected, the coating of lacquer around the weld will be scorched, whereby the original, usually white colour of the jambs becomes visible.

With the known method this weld, after both jambs have been connected, will be cut away up to a certain depth, whereby a strip of the synthetic material out of which the jambs have been made becomes visible, which strip is then touched up by hand in a colour which corresponds to that of the lacquer.

A disadvantage of the present method is that a small groove is created at the weld as the scorched lacquer is cut away, which is unaesthetic. In short, the present method does not allow for a perfect finish of the connection of the two plastic jambs.

Another disadvantage of the known method is that cutting away and manually touching up the weld is relatively time-consuming and expensive.

Moreover, the quality of touching up the colour manually is not good in many cases, and the colourfastness of the touched-up weld cannot be guaranteed.

Also, the present invention aims to remedy one or several of the preceding and other disadvantages.

To this end, the invention concerns a method for connecting two plastic jambs for a window or the like which mainly consists in heating a contact surface of at least one of both jambs and pressing it against a corresponding contact surface of the other jamb so as to weld them together whereby, before both jambs are welded, a part of the contact surface of at least one of both jambs is removed along at least one of the outer walls of this jamb over a certain distance so as to form an edge which corresponds to a joint to be realised, and whereby at least one of the jambs, before both jambs are connected, is provided with a coating of lacquer on its above-mentioned outer wall.

An advantage of the present invention is that the above-mentioned coating of lacquer must not be heated anywhere, such that scorching of the lacquer can be avoided.

Preferably, the width of the removed part is only a fraction of the thickness of the above-mentioned outer wall.

An advantage of the preferred method is that the stability of the formed angle joint is sufficiently large to be applied in window or door frames.

Another advantage is that an angle joint which can be obtained according to the preferred method can be made watertight and windproof without any additional measures being required, such as for example applying a silicone.

In order to better explain the characteristics of the present invention, the following method according to the invention is described as an example only without being limitative in any way, with reference to the accompanying drawings, in which:
figure 1 schematically represents a method according to the invention;
figure 2 represents a view according to arrow F2 in figure 1 to a larger scale;
figure 3 represents two jambs which are connected according to a method of the invention;
figure 4 represents a section according to line IV-IV in figure 3;
figure 5 represents a variant of figure 2;
figures 6 and 7 represent variants of figure 1.

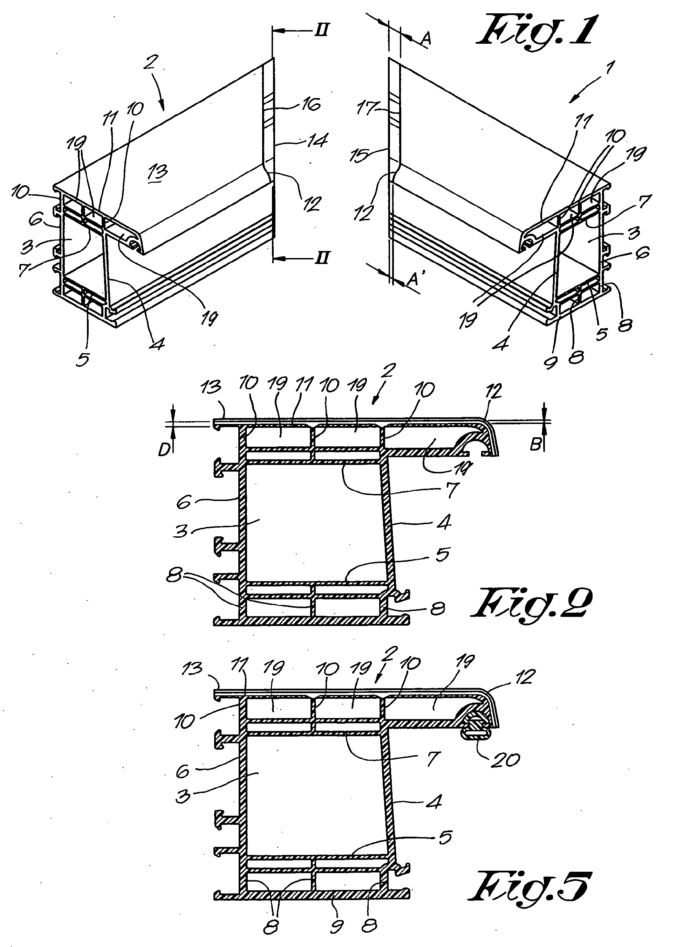

Figure 1 schematically represents a method according to the invention for connecting two plastic jambs 1 and 2.

Both jambs 1, 2 are built in an analogous manner and in this case have a central chamber 3 which is confined by four side walls 4, 5, 6 and 7.

On one of these side walls 5 are provided ribs 8 which are mutually connected at their free far end by an outer wall 9 of the jamb 1, 2.

In an analogous manner, on an opposite side wall 7 of the central chamber 3, are provided ribs 10 which are connected at their free far ends by an outer wall 11 of the jamb 1, 2.

In this case, the latter outer wall 11 is lengthened and it is finished with a curvature 12 at its lengthened far end. This lengthened part of the outer wall 11 is hereby designed as a stop in a finished window or door frame.

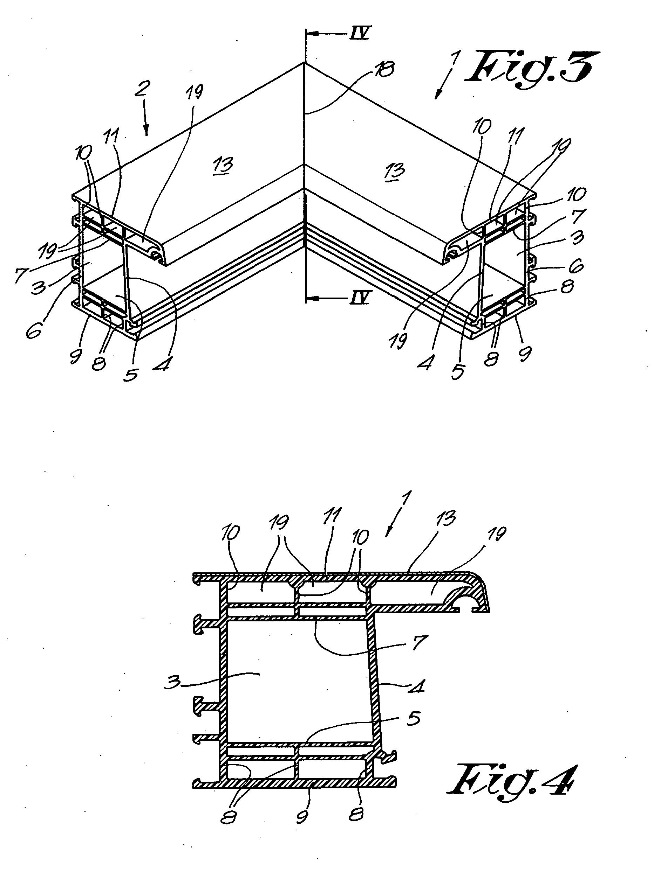

On the above-mentioned outer wall 11 of the jambs 1 and 2 is provided, according to the invention, a finishing layer 13, such as for example a coating of lacquer. This coating of lacquer can have many different natures; it may be for example an epoxy polyurethane lacquer. It should be noted that the coating of lacquer 13 is represented somewhat thicker in figures 2, 4 and 5, for clarity's sake.

In this case, both jambs are mitred at their far ends to be connected by means of cutting, whereby these far ends form the mutual contact surfaces 14, 15 respectively for connecting both jambs 1, 2.

According to the invention, along the outer wall 11 of the jamb 1, a part of the contact surface 14 is removed over a certain distance A so as to form an edge 16.

Preferably, a part of the contact surface 15 of the other jamb 2 is removed over a distance A in an analogous manner so as to form an edge 17.

The above-mentioned distance A is preferably in the order of magnitude of 3 mm, but it can strongly vary as a function of the materials used, the aimed strength of the connection and the like.

According to the invention and as represented in figure 2, the width B of the part of the contact surfaces 14 and 15 which is removed, represents a fraction of the thickness D of the outer wall 11 concerned.

It should be noted that on the spot where the above-mentioned ribs 10 connect to the corresponding outer wall 11, the width of the removed part is somewhat larger than the thickness D of the outer wall 11 concerned.

According to the method of the invention, the remaining parts of the contact surfaces 14, 15 are heated to the melting temperature, after which the contact surfaces 14, 15 are pressed together.

As they are pressed together, the heated contact surfaces 14, 15 melt together, whereby an appropriate pressure must be exerted to make both contact surfaces 14 and 15 melt together over a distance, which distance is preferably equal to or practically equal to the above-mentioned distance A.

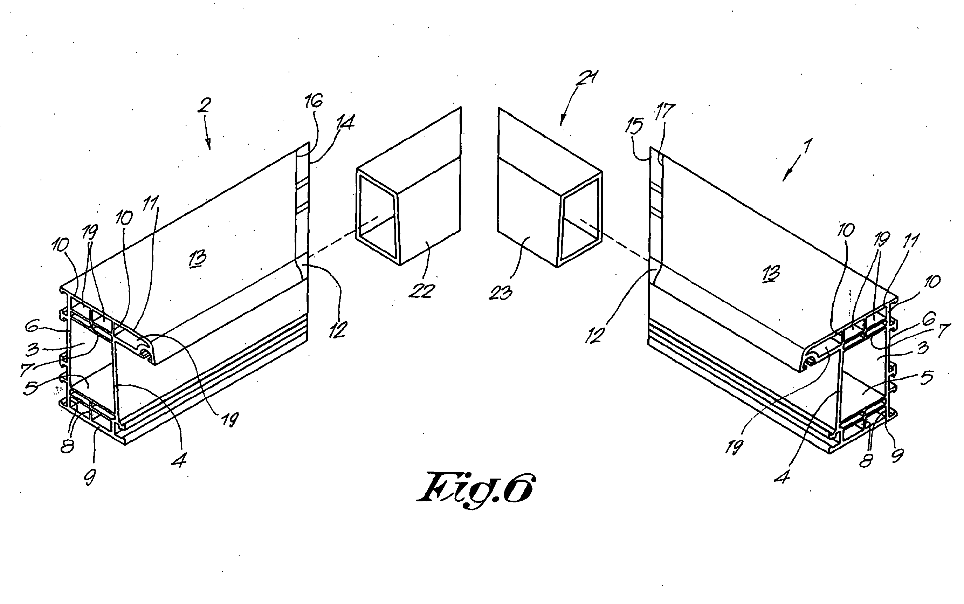

As is represented in figure 3, the edges 16, 17 of both jambs 1, 2 will touch in that case or at least almost touch and thus form a joint 18.

When the contact surfaces 14 and 15 melt together, the remaining material of the outer walls 11 will be pushed away to chambers 19 which are defined between the side wall 7 of the central chamber 3, the outer wall 11 and the ribs 10.

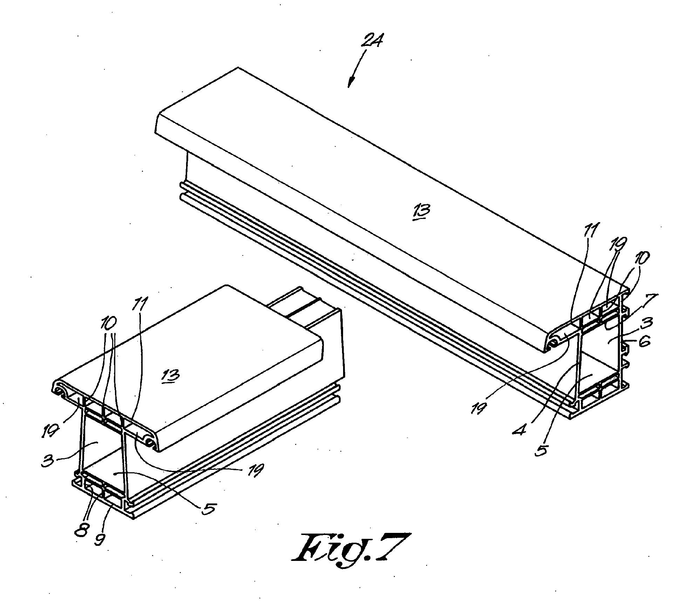

The same will happen at the location of the ribs 10, such that when both jambs 1 and 2 have melted together, the outer walls 11 will be locally connected over their entire length, which is clearly represented in figure 4.

This melting together of the outer walls 11 of both jambs 1 and 2 over their entire length moreover guarantees that the above-mentioned jambs 1 and 2 are fixed together in a watertight and windproof manner.

In order to be able to form an aesthetic right angle, as is represented in figure 1, at the above-mentioned curvature 12, a part of the outer wall 11 which is adjacent to the contact surface 14 is removed over a distance A' which is somewhat smaller than the above-mentioned distance A. In other words, at the curvature 12, a little less material is removed than elsewhere along this outer wall 11, since otherwise, when two plastic jambs melt into an angle joint, the jambs could slightly diverge.

In the case, as is represented in figure 5, where a sealing 20 is provided in the part of the outer wall 11 forming a stop, a part of this sealing 20 is preferably removed.

This removal of a part of the sealing 20 prevents the sealing 20, which is usually made of rubber, from curing while the jambs 1 and 2 are welded together, such that the sealing 20 can maintain its optimal elasticity.

Figure 6 represents a variant whereby an insert angle 21 is applied which makes it possible to reinforce the connection between both jambs 1 and 2.

In this case, this insert angle 21 consists of two legs 22, 23 which are made of plastic and which are mitred, either cut or sawn. Naturally, the above-mentioned legs 22, 23 can also be formed by means of injection-moulding.

The method for connecting the two jambs 1 and 2 with the use of the insert angle 21 consists in fixing, before both jambs 1 and 2 are connected, one of the above-mentioned legs 22, 23 in each of said jambs 1-2 by means of welding, gluing or the like, such that the mitred sides of these legs 22 and 23 are situated in one and the same plane or practically the same plane as the above-mentioned contact surfaces 14, 15 of the jambs 1 and 2.

Finally, both jambs 1 and 2 are welded together, whereby the mitred sides of both legs 22 and 23 are welded together as well so as to form the above-mentioned insert angle 21.

It should be noted that the above-mentioned legs 22 and 23 must not necessarily be provided in a central chamber 3 of the jambs 1 and 2, but are preferably provided in chambers 19 which are situated at the removed part of the jambs 1 and 2.

As an alternative for an insert angle 21, it is also possible, after two jambs have been connected, to inject a glue or curing foam in one or several of the chambers 19, to which end, in the finished window, in a hidden place of the jambs 1 and 2, small bores are made through which the glue or the foam can be injected in the chambers 19.

It is clear that along more than one side wall of each jamb 1, 2, part of the contact surface 14, 15 concerned can be cut away up to a certain distance A, for example when two of the outer walls of the jambs 1 and 2 are meant to remain visible.

It should be noted that, moreover, it is not necessary to remove a part of both contact surfaces, for it is also possible to remove a part of the contact surface 14 of the first jamb 1 and to subsequently heat it, whereas the contact surface 15 of the second jamb 2 is only locally heated, in particular over a surface which corresponds to the remaining part of the contact surface 14, after which the first jamb 1 can be pressed with its contact surface 14 against the contact surface 15 of the second jamb 2.

In the latter case, the edge 8 of the second jamb 2 coincides with the contact surface 15 of this jamb 2.

Finally, figure 7 represents a variant whereby both jambs 1-2 are connected in the shape of a T-connection 24.

In this case, the first jamb 1 is fixed with one of its far ends to a side wall 4 of the second jamb 2, to which end the contact surface 14 of the first jamb 1 is partly removed along at least one outer wall 11 of this jamb 1.

The contact surface 15 of the second jamb 2 is in this case formed of a part of the above-mentioned side wall 4, out of which no part has to be removed, but which part, in case the side wall 4 is adjacent to one or two side walls 9, 11 which are provided with a coating of lacquer 13, only has to be partly heated, in particular over a surface which preferably corresponds to the remaining contact surface 14 of the first jamb 1.

Finally, it should be noted that the above-mentioned edges 16-17 of at least one of two jambs 1-2 to be connected can be partly heated briefly, whereby when both jambs 1-2 are welded together, the edges 16-17 of both jambs partly melt together.

The present invention is by no means limited to the above-described method represented in the figures; on the contrary, such a method according to the invention for connecting two plastic jambs can be made according to different variants while still remaining within the scope of the invention.

## Claims

1. Method connecting two plastic jambs (1-2) for a window or the like which mainly consists in heating a contact surface (14) of at least one of both jambs (1) and pressing it against a corresponding contact surface (15) of the other jamb (2) so as to weld them together whereby, before both jambs (1-2) are welded, a part of the contact surface (14) of at least one of both jambs (1-2) is removed along at least one of the outer walls (9,11) of this jamb (1, 2) over a certain distance (A) so as to form an edge (16, 17) which corresponds to a joint (18) to be realised, **characterised in that** at least one of the jambs (1, 2), before both jambs (1, 2) are connected, is provided with a coating of lacquer (13) on its above-mentioned outer wall (9, 11).

2. Method according to claim 1, **characterised in that** the width (B) of the removed part represents only a fraction of the thickness (D) of the above-mentioned outer wall (9, 11).

3. Method according to claim 1, **characterised in that** both jambs (1-2) are pressed together with their contact surfaces (14-15) until the above-mentioned edges (16-17) of both jambs (1-2) touch or almost touch and thus form the joint (18) to be realised.

4. Method according to claim 1, **characterised in that** at least a fraction of the edges (16-17) of at least one of both jambs is heated and, during the welding of the jambs (1-2), is welded to a corresponding edge (16-17) of the other jamb (1-2).

5. Method according to claim 2, whereby the outer wall (9, 11) of the jambs (1, 2) to be connected is provided on different cross ribs (8, 10), **characterised in that** the part of the contact surfaces (14, 15) to be removed has a width (B') at the above-mentioned ribs (3, 10) which is larger than the thickness (D) of the outer wall (9, 11).

6. Method according to claim 1, whereby one of the outer walls (11) of the jambs (1, 2) to be connected is lengthened and is provided with a curvature (12), **characterised in that** the distance A' over which a part of the contact surface (14, 15) has been removed at the curvature (12), is smaller than the above-mentioned distance A.

7. Method according to claim 1, **characterised in that** the specific distance A over which a part of the contact surfaces (14-15) of the jambs (1-2) is removed, amounts to some 3 mm.

8. Method according to claim 1, **characterised in that** the contact surface (14, 15) of which no part is removed, is partly heated so as to connect both jambs (1-2).

9. Method according to claim 1, **characterised in that** the jambs (1-2) are cylindrical and **in that** an insert angle (12) is provided in their far ends to be connected which consists of two legs (13-14) of which each time at least one side is mitred, which are each fixed in a jamb (1-2), such that their mitred sides are situated in the same or practically the same plane as the contact surface (3-4) of the jambs (1-2), after which both jambs (1-2) and the above-mentioned sides of the legs (13-14) are welded together.

10. Method according to claim 1, **characterised in that** in the cylinders of two welded jambs (1-2) is injected a glue or a foam.

11. Method according to claim 1, **characterised in that** the above-mentioned jambs are provided with a part forming a stop in which a sealing (20) is provided, whereby before both jambs (1-2) are welded, at least a part of the sealing (20) is removed at the contact surface (14-15) between both jambs (1-2).
